# FASCICULE DE BREVET EUROPEEN

(11) **EP 2 516 235 B1**
(45) Date de publication et mention de la délivrance du brevet: **26.04.2017**
(21) Numéro de dépôt: 10805465.1
(22) Date de dépôt: 06.12.2010
(51) Int. Cl.: B60W 20/00, B60W 30/18, B60K 6/52, B60K 6/48, B60W 10/06, B60W 10/08, B60W 10/02

(54) **PROCEDE ET DISPOSITIF POUR OBTENIR UN DECOLLAGE A FORTE CHARGE DE VEHICULES HYBRIDES**
VERFAHREN UND VORRICHTUNG FÜR SCHWERLASTBESCHLEUNIGUNG BEI HYBRIDFAHRZEUGEN
METHOD AND DEVICE FOR ACHIEVING HEAVY-LOAD ACCELERATION FOR HYBRID VEHICLES

(30) Priorité: 23.12.2009 FR 0959453
(43) Date de publication de la demande: 31.10.2012
(73) Titulaire: Peugeot Citroën Automobiles SA, 78140 Vélizy Villacoublay (FR)
(72) Inventeur: ROCQ, Gaëtan, F-78125 La Boissiere-ecole (FR); GALINAUD, Florian, F-75013 Paris (FR)
(74) Mandataire: Rosenberg, Muriel Sylvie
(86) Numéro de dépôt international: PCT/FR2010/052618
(87) Numéro de publication internationale: WO 2011/086252

(56) Documents cités:
- EP-A2- 0 769 402
- EP-A2- 2 110 289
- WO-A1-2006/129853
- DE-A1-102007 022 774
- US-A1- 2007 050 120

## Description

L'invention concerne un procédé et un dispositif pour obtenir un décollage à forte charge de véhicules hybrides, notamment de véhicules hybrides automobiles, au moyen d'un moteur à combustion interne et d'une machine électrique. Un décollage à forte charge consiste à appliquer un couple maximal aux roues de façon à obtenir un décollage rapide du véhicule.

Le document FR 2 882 698 décrit déjà un procédé de décollage rapide d'un véhicule hybride. Ce document de l'état de la technique divulgue un procédé dans lequel on démarre le moteur thermique ou à combustion interne en même temps que la machine électrique est actionnée, à l'aide d'un système de démarrage indépendant mécaniquement de la machine électrique. Lorsque le moteur thermique, encore nommé moteur à combustion interne, est démarré, un certain temps est nécessaire pour faire monter le moteur à un régime suffisant qui permet d'obtenir le couple nécessaire au décollage du véhicule par le moteur à combustion interne. La machine électrique dont le temps de réponse est généralement court, permet par contre d'obtenir un couple instantanément. Pendant la montée en régime du moteur à combustion interne, le couple de la machine électrique est appliqué aux roues dans un premier temps puis, dans un second temps, lorsque le moteur à combustion interne a atteint un régime suffisant, le couple du moteur à combustion interne s'ajoute au couple de la machine électrique pour être appliqué aux roues. L'inconvénient pour le conducteur est de ressentir une accélération en deux temps, source de désagrément.

Le document WO2006/129853 A1 décrit un procédé pour obtenir un décollage à forte charge de véhicules hybrides, selon le préambule de la revendication 1 et un dispositif pour fournir un décollage forte charge d'un véhicule hybride selon le préambule de la revendication 5.

L'invention a pour objectif de remédier aux inconvénients de l'état antérieur de la technique.

Pour répondre à cet objectif, l'invention a pour objet un procédé dans lequel on commande à la machine électrique de fournir du couple lorsqu'on détecte que le moteur à combustion interne a est démarré et a dépassé un régime de couple optimal suffisant pour fournir un couple apte à suivre une consigne de couple d'entraînement du véhicule et qu'on détecte que la position embrayage est proche du point de patinage.

Particulièrement, on commande à la machine électrique de démarrer en fournissant un premier couple dont la valeur suit une première consigne et on ferme progressivement un embrayage de façon à fournir à partir du moteur à combustion interne, un deuxième couple qui suit une deuxième consigne de même allure que la première consigne.

Plus particulièrement, on augmente le régime du moteur à combustion interne lorsque l'on détecte une demande de décollage forte charge jusqu'à atteindre ledit régime prédéterminé.

Avantageusement, on démarre le moteur à combustion interne avant de fournir du couple par la machine électrique.

L'invention a aussi pour objet un dispositif pour fournir un décollage forte charge d'un véhicule hybride comprenant un moteur à combustion interne, une machine électrique et un calculateur de supervision du moteur à combustion interne et de la machine électrique. Le dispositif est remarquable en ce que le calculateur de supervision comprend :
- une entrée de détection d'un régime du moteur à combustion interne au-dessus d'un régime prédéterminé ;
- une entrée de détection du moteur à combustion interne démarré ;
- une entrée de détection de la position embrayage proche du point de patinage.
- un programme qui commande à la machine électrique de démarrer et de fournir du couple lorsqu'il détecte que le moteut à combustion interne est démarré et que le régime du moteur à combustion interne a dépassé un régime de couple optimal suffisant pour fournir un couple apte à suivre une consigne de couple d'entraînement du véhicule et que la position embrayage est proche du point de patinage.

Particulièrement, le calculateur de supervision comprend :
- une sortie de consigne de couple à fournir par la machine électrique ; et
- une sortie de consigne de couple à fournir à partir du moteur à combustion interne.

Plus particulièrement, le calculateur de supervision comprend une entrée de détection de demande de décollage forte charge.

Avantageusement, le calculateur de supervision comprend une sortie de commande de démarrage du moteur à combustion interne.

L'invention sera mieux comprise, et d'autres buts, caractéristiques, détails et avantages de celle-ci apparaîtront plus clairement de la description explicative qui va suivre faite en référence aux dessins annexés donnés uniquement à titre d'exemple illustrant un mode de réalisation de l'invention et dans lesquels :
- la figure 1 est une vue schématique d'un groupe motopropulseur de véhicule hybride ;
- la figure 2 est une courbe qui met en évidence une évolution de couple en deux temps lorsque l'invention n'est pas mise en oeuvre ;
- la figure 3 est un ensemble de courbes qui mettent en évidence le cadencement d'un procédé conforme à l'invention.

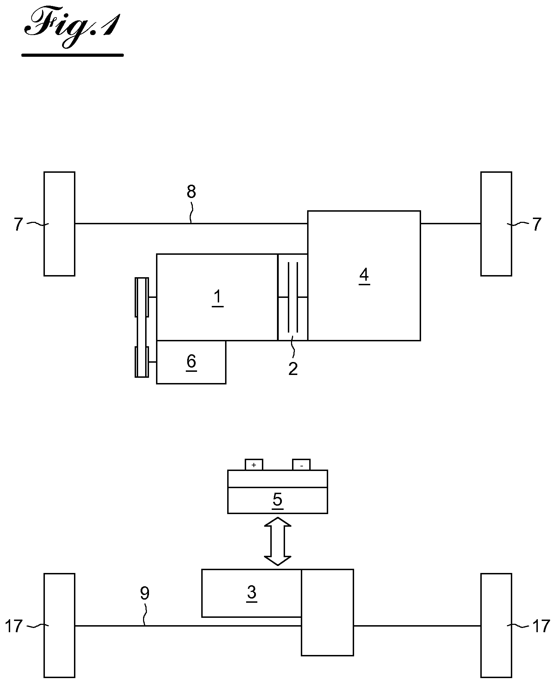

On a représenté sur la figure 1, un groupe motopropulseur de véhicule hybride parallèle. La combinaison de deux types d'énergie, thermique et électrique, permet de garantir la traction des véhicules hybrides parallèles en optimisant le rendement énergétique, diminuant ainsi la consommation et la pollution. Des véhicules hybrides parallèles sont généralement capables de rouler indépendamment grâce à l'énergie thermique d'un moteur à combustion interne 1 ou grâce à l'énergie électrique d'une machine électrique 3 de traction.

Le moteur 1 est, de manière connue, à combustion interne de type essence, diesel ou autre. De manière connue en soi, le moteur à combustion interne 1 est muni d'un volant d'inertie non représenté sur la figure. Un système 2 de couplage/découplage réalisé par un embrayage sec (EMB), humide ou autre relie le moteur à combustion interne 1 à un système 4 de démultiplication à N rapports discrets réalisé au moyen d'une boîte de vitesses manuelle pilotée (BVMP), d'une boîte de vitesses à double embrayage (DCT pour Dual Clutch Transmission) d'une boîte de vitesses automatique (BVA) ou de toute autre boîte de vitesses (BV). Le système 4 de démultiplication est relié à un arbre de transmission 8 qui entraîne deux roues 7 avant du véhicule.

Une batterie de puissance 5 (BET) ou tout autre système de stockage d'énergie électrique pour la traction tel que par exemple des supers condensateurs, alimente une machine électrique 3 (MEL) qui entraîne un train arrière 9 connecté à deux roues arrière 17. Un système 6 de démarrage indépendant du moteur à combustion interne (SDI) est réalisé sous forme d'un démarreur piloté, d'un système de (stop & start) ou autre.

Chaque organe 1, 2, 3, 4 est piloté par un calculateur de contrôle rapproché (non représenté) qui lui est propre. L'ensemble des calculateurs de contrôle rapproché, est lui même commandé par un calculateur unique dit de supervision qui prend des décisions et synchronise des actions pour répondre à la volonté du conducteur. Le calculateur de supervision, en fonction des situations de vie et de l'état du véhicule, pilote la chaîne de traction. Le calculateur de supervision décide du mode de roulage, coordonne toutes les phases transitoires et choisit les points de fonctionnement afin d'optimiser la consommation de carburant, la dépollution et l'agrément du véhicule.

Le calculateur de supervision pilote, notamment via le calculateur de contrôle rapproché associé, la machine électrique 3 solidaire du train arrière 9 de façon à fournir le couple nécessaire pour faire avancer le véhicule quand le moteur à combustion interne est arrêté.

Le procédé de l'invention consiste à utiliser conjointement le moteur à combustion interne qui entraîne une première paire de roues 7 et la machine électrique 3 qui entraîne une deuxième paire de roues 17 pour fournir du couple aux roues lors des décollages du véhicule à forte charge de façon à obtenir une performance maximale du groupe motopropulseur. On rappelle que la charge dans le contexte de l'invention, est le couple de consigne roues, issu de la valeur d'enfoncement de la pédale d'accélérateur.

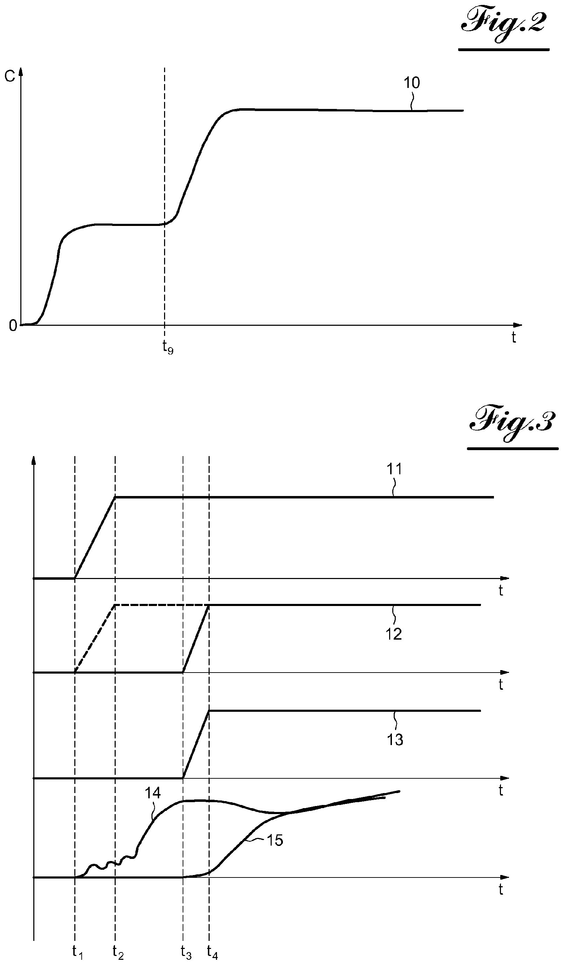

De façon à mieux comprendre les différentes composantes du procédé et du dispositif conformes à l'invention, on a représenté en figure 2 une courbe d'évolution du couple C en fonction du temps t en absence de l'invention. Etant donné les temps de réponse spécifiques d'une machine électrique et d'un groupe motopropulseur thermique comprenant le moteur à combustion interne 1, la boîte de vitesses 4 pilotée et l'embrayage 2, lors d'une forte demande de couple au décollage, la machine électrique 3 produit du couple un certain temps avant le groupe motopropulseur (GMP) thermique. On voit sur la courbe de la figure 2 que la machine électrique (MEL) fournit du couple aux roues dès la demande du conducteur à l'instant zéro. Le couple C augmente rapidement jusqu'à atteindre un palier maintenu au cours du temps t. La courbe 10 représente l'accélération ressentie par le conducteur. Après un temps de l'ordre de quelques centaines de millisecondes, repéré sur la courbe par la barre verticale en pointillés, le moteur à combustion interne est apte à fournir du couple aux roues seulement à partir de l'instant t₉. A partir de l'instant t₉, le couple fourni par le moteur à combustion interne s'ajoute au couple fourni par la machine électrique. La somme des deux couples augmente alors jusqu'à atteindre un deuxième palier supérieur au palier atteint avant l'instant t₉. Ainsi, la sensation ressentie par le conducteur est celle d'un décollage en deux temps. Ce type de décollage en deux temps est mal perçu en termes d'agrément. Pour des raisons d'agrément et de ressenti subjectif, l'augmentation du couple roues lors d'un décollage ne doit pas se produire en deux temps.

Le procédé que nous expliquons à présent en référence à la figure 3 consiste essentiellement à synchroniser une répartition de la fourniture de couple entre la machine électrique et le moteur à combustion interne afin d'améliorer le ressenti subjectif du décollage.

Le dispositif de l'invention comprend essentiellement un ensemble d'entrées/sorties et un programme informatique hébergés par le calculateur de supervision. Les entrées comprennent une détection du moteur à combustion interne démarré, une détection du moteur à combustion interne au-dessus d'un régime prédéterminé, une détection de rapport de boîte de vitesses approprié engagé, et une détection de fort gradient d'enfoncement de la pédale d'accélérateur. Les sorties comprennent une consigne de couple à fournir par le groupe motopropulseur d'entraînement des roues 7 et une consigne de couple à fournir par la machine électrique d'entraînement des roues 17.

Le calculateur de supervision est alors programmé pour exécuter le procédé illustré par les courbes de la figure 3.

La courbe 11 marque une volonté du conducteur évoluant au cours du temps t. Le signal de la courbe 11 est celui reçu par l'entrée représentative de l'enfoncement de la pédale d'accélérateur. A partir d'un instant t₁, l'enfoncement de la pédale d'accélérateur augmente jusqu'à atteindre à un instant t₂ un seuil qui indique une demande de décollage forte charge.

La courbe 14 représente le régime de rotation du moteur à combustion interne 1 au cours du temps t. Dès la demande du conducteur à l'instant t₁, le moteur à combustion interne 1 est démarré par le système 6 de démarrage indépendant. Les trois petites vagues que l'on observe après l'instant t₁ traduisent schématiquement sur la courbe 14 les premiers allumages du moteur 1 à combustion interne entraîné par le système 6 de démarrage jusqu'à atteindre un régime suffisant pour fournir le couple nécessaire à son entraînement propre sans contribution du système 6 de démarrage. Comme l'illustre la courbe 14, le régime du moteur à combustion interne augmente alors jusqu'à atteindre, à l'instant t₃, un régime suffisant pour fournir un couple apte à suivre une consigne de couple d'entraînement du véhicule. Le régime atteint par le moteur à combustion interne à l'instant t₃ permet de fermer progressivement l'embrayage 2 pour entraîner l'arbre primaire de la boîte de vitesses 4 sans risque de faire caler le moteur à combustion interne 1. La courbe 15 représente le régime de rotation de l'arbre primaire de la boîte de vitesses 4.

A l'instant t₃, le calculateur de supervision détecte que le moteur à combustion interne est démarré et a dépassé un régime de couple optimal, et commande l'embrayage pour que celui-ci se rapproche du point de patinage. Une fois que la position embrayage proche du point de patinage est détectée, le calculateur de supervision commande à la machine électrique 3 de fournir du couple en suivant une consigne de couple semblable à celle représentée par la courbe 12. A l'instant t₃, le calculateur de supervision commande au groupe motopropulseur GMP d'appliquer sur les roues 7 une consigne de couple de même allure comme représenté par la courbe 13.

La machine électrique 3, régulée en courant, fournit aux roues 17 un couple dont la valeur suit la consigne de sorte que la courbe 12 représente la valeur effective de couple fourni par la machine électrique 3 aux roues 17.

A partir de l'instant t₃, le moteur à combustion interne est capable de fournir un couple supérieur ou au moins égal à la consigne qui lui est donnée par le calculateur de supervision. La différence entre le couple fourni par le groupe motopropulseur aux roues 7 et la consigne qui lui est donnée par le calculateur de supervision, est annulée de manière connue en fermant progressivement l'embrayage 2 que l'on fait patiner pour absorber la différence de couple.

Ainsi, le couple donné aux roues a une valeur égale à la somme des valeurs de la courbe 12 et de la courbe 13 au cours du temps t, évoluant de manière uniforme pour procurer un décollage forte charge performant.

Pendant la phase d'embrayage permettant d'équilibrer le couple, le régime de l'arbre primaire de la boîte de vitesses 4 qui suit l'allure de la courbe 15, se rapproche progressivement du régime du moteur à combustion interne qui suit l'allure de la courbe 14. Lorsque l'embrayage 2 est totalement fermé, la courbe 15 est confondue avec la courbe 14, de sorte que les roues ont atteint un régime qui suit le régime du moteur à combustion interne sans que le conducteur ait noté une différence quelconque de montée en vitesse.

Le procédé et le dispositif de l'invention permettent ainsi d'avoir un décollage en un temps, avec les deux fournisseurs de couple qui sont synchronisés.

## Revendications

1. Procédé pour obtenir un décollage à forte charge de véhicules hybrides au moyen d'un moteur (1) à combustion interne et d'une machine électrique (3), **caractérisé en ce qu'**il consiste à commander à la machine électrique (3) de fournir du couple lorsqu'on détecte que le moteur (1) à combustion interne est démarré et a dépassé un régime de couple optimal suffisant pour fournir un couple apte à suivre une consigne de couple d'entraînement du véhicule et qu'on détecte que la position embrayage est proche du point de patinage.

2. Procédé selon la revendication 1, **caractérisé en ce que** :
- on commande à la machine électrique (3) de démarrer en fournissant un premier couple dont la valeur suit une première consigne ;
- on ferme progressivement un embrayage (2) de façon à fournir à partir du moteur à combustion interne (1) un deuxième couple qui suit une deuxième consigne de même allure que la première consigne.

3. Procédé selon l'une des revendications 1 ou 2, **caractérisé en ce que** l'on augmente le régime du moteur à combustion interne lorsque l'on détecte une demande de décollage forte charge jusqu'à atteindre ledit régime prédéterminé.

4. Procédé selon l'une des revendications 1 à 3, **caractérisé en ce qu'**il consiste à démarrer le moteur (1) à combustion interne avant de fournir du couple par la machine électrique (3).

5. Dispositif pour fournir un décollage forte charge d'un véhicule hybride comprenant un moteur à combustion interne (1), une machine électrique (3) et un calculateur de supervision du moteur à combustion interne et de la machine électrique, **caractérisé en ce que** le calculateur de supervision comprend :
- une entrée de détection d'un régime du moteur à combustion interne au-dessus d'un régime prédéterminé ;
- une entrée de détection du moteur à combustion interne démarré ;
- une entrée de détection de la position embrayage proche du point de patinage ;
- un programme qui commande à la machine électrique (3) de démarrer et de fournir du couple lorsqu'il détecte que le moteur (1) à combustion interne est démarré et que le régime du moteur (1) à combustion interne a dépassé un régime de couple optimal suffisant pour fournir un couple apte à suivre une consigne de couple d'entraînement du véhicule et qu'il détecte que la position embrayage est proche du point de patinage.

6. Dispositif selon la revendication 5 **caractérisé en ce que** le calculateur de supervision comprend :
- une sortie de consigne de couple à fournir par la machine électrique (3) ; et
- une sortie de consigne de couple à fournir à partir du moteur à combustion interne (1).

7. Dispositif selon l'une des revendications 5 ou 6, **caractérisé en ce que** le calculateur de supervision comprend une entrée de détection de demande de décollage forte charge.

8. Dispositif selon l'une des revendications 5 à 7, **caractérisé en ce que** le calculateur de supervision comprend une sortie de commande de démarrage du moteur (1) à combustion interne.

## Patentansprüche

1. Verfahren für den Erhalt eines Schwerlaststarts von Hybridfahrzeugen anhand eines Innenverbrennungsmotors (1) und einer elektrischen Maschine (3), **dadurch gekennzeichnet, dass** es darin besteht, der elektrischen Maschine (3) zu befehlen, ein Moment bereitzustellen, wenn man feststellt, dass der Innenverbrennungsmotor (1) gestartet ist und eine Drehzahl bei optimalem Drehmoment überschritten hat, das ausreichend ist, um ein Drehmoment bereitzustellen, das imstande ist, einem Drehmomentsollwert für den Antrieb des Fahrzeugs zu entsprechen, und man feststellt, dass die Kupplungsposition nahe dem Schleifpunkt steht.

2. Verfahren nach Anspruch 1, **dadurch gekennzeichnet, dass**:
- man der elektrischen Maschine (3) befiehlt, zu starten und ein erstes Drehmoment bereitzustellen, dessen Wert einem ersten Sollwert entspricht;
- man schrittweise eine Kupplung (2) schließt, um aus dem Innenverbrennungsmotor (1) ein zweites Drehmoment zu liefern, das einem zweiten Sollwert entspricht, der sich wie der erste Sollwert verhält.

3. Verfahren nach einem der Ansprüche 1 oder 2, **dadurch gekennzeichnet, dass** man die Drehzahl des Innenverbrennungsmotors erhöht, wenn man eine Anforderung für einen Schwerlaststart feststellt, bis die besagte vorbestimmte Drehzahl erreicht wird.

4. Verfahren nach einem der Ansprüche 1 bis 3, **dadurch gekennzeichnet, dass** es darin besteht, den Innenverbrennungsmotor (1) zu starten, bevor man ein Drehmoment von der elektrischen Maschine (3) liefert.

5. Vorrichtung zum Bereitstellen eines Schwerlaststarts eines Hybridfahrzeugs, einen Innenverbrennungsmotor (1), eine elektrische Maschine (3) und einen Überwachungsrechner des Innenverbrennungsmotors und der elektrischen Maschine umfassend, **dadurch gekennzeichnet, dass** der Überwachungsrechner Folgendes umfasst:
- einen Eingang zum Feststellen einer Drehzahl des Innenverbrennungsmotors über einer vorbestimmten Drehzahl;
- einen Eingang zum Feststellen des gestarteten Innenverbrennungsmotors;
- einen Eingang zum Feststellen der Kupplungsposition nahe dem Schleifpunkt;
- ein Programm, das der elektrischen Maschine (3) befiehlt, zu starten und ein Drehmoment bereitzustellen, wenn es feststellt, dass der Innenverbrennungsmotor (1) gestartet ist, und dass die Drehzahl des Innenverbrennungsmotors (1) eine Drehzahl bei optimalem Drehmoment überschritten hat, das ausreichend ist, um ein Drehmoment bereitzustellen, das imstande ist, einem Drehmomentsollwert für den Antrieb des Fahrzeugs zu entsprechen, und es feststellt, dass die Kupplungsposition nahe dem Schleifpunkt steht.

6. Vorrichtung nach Anspruch 5, **dadurch gekennzeichnet, dass** der Überwachungsrechner Folgendes umfasst:
- einen Ausgang für den Drehmomentsollwert, der von der elektrischen Maschine (3) bereitzustellen ist; und
- einen Ausgang für den Drehmomentsollwert, der aus dem Innenverbrennungsmotor (1) bereitzustellen ist.

7. Vorrichtung nach einem der Ansprüche 5 oder 6, **dadurch gekennzeichnet, dass** der Überwachungsrechner einen Eingang zum Feststellen der Anforderung für einen Schwerlaststart umfasst.

8. Vorrichtung nach einem der Ansprüche 5 bis 7, **dadurch gekennzeichnet, dass** der Überwachungsrechner einen Ausgang für den Startbefehl des Innenverbrennungsmotors (1) umfasst.

## Claims

1. Method for obtaining a heavy load acceleration of hybrid vehicles by means of an internal combustion engine (1) and of an electric machine (3), **characterised in that** it consists of ordering the electric machine (3) to provide torque when it is detected that the internal combustion engine (1) has started and has exceeded optimum torque conditions sufficient for providing a torque capable of following a set value of a torque for driving the vehicle and when it is detected that the clutch position is close to the slipping point.

2. Method according to claim 1, **characterised in that**:
- the electric machine (3) is ordered to start by providing a first torque, the value of which follows a first set value;
- a clutch (2) is gradually closed so as to provide from the internal combustion engine (1) a second torque which follows a second set value with the same aspect as the first set value.

3. Method according to one of claims 1 or 2, **characterised in that** the speed of the internal combustion engine (1) is increased when a request for a heavy-load acceleration is detected, until it attains said predetermined speed.

4. Method according to one of claims 1 to 3, **characterised in that** it consists of starting the internal combustion engine (1) before providing torque with the electric machine (3).

5. Device for providing a heavy load acceleration of a hybrid vehicle comprising an internal combustion engine (1), an electric machine (3) and a computer for supervising the internal combustion engine and the electric machine, **characterised in that** the supervision computer comprises:
- an input for detecting a speed of the internal combustion engine above a predetermined speed;
- an input for detecting a started internal combustion engine;
- an input for detecting the clutch position close to the slipping point;
- a program which orders the electric machine (3) to start and to provide a torque when it detects that the internal combustion engine (1) has started and that the speed of the internal combustion engine (1) has exceeded an optimum torque speed sufficient for providing a torque capable of following a torque set value for driving the vehicle and that it detects that the clutch position is close to the slipping point.

6. Device according to claim 5, **characterised in that** the supervision computer comprises:
- a torque set value output to be provided by the electric machine (3); and
- a torque set value output to be provided from the internal combustion engine (1).

7. Device according to one of claims 5 or 6, **characterised in that** the supervision computer comprises an input for detecting a request for heavy load acceleration.

8. Device according to one of claims 5 to 7, **characterised in that** the supervision computer comprises an output for ordering the starting of the internal combustion engine (1).
